Europäisches Patentamt

European Patent Office

Office européen des brevets

(19)

(11) Veröffentlichungsnummer : **0 078 944**
**B1**

# (12) EUROPÄISCHE PATENTSCHRIFT

(45) Veröffentlichungstag der Patentschrift :
26.06.85

(21) Anmeldenummer : 82109648.4

(22) Anmeldetag : 19.10.82

(51) Int. Cl.⁴ : **F 16 D 59/02**

---

(54) Elektromagnetisch betätigte Federdruckbremse.

---

(30) Priorität : 05.11.81 DE 3143891

(43) Veröffentlichungstag der Anmeldung :
18.05.83 Patentblatt 83/20

(45) Bekanntmachung des Hinweises auf die Patenterteilung : 26.06.85 Patentblatt 85/26

(84) Benannte Vertragsstaaten :
CH FR GB IT LI

(56) Entgegenhaltungen :
DE-B- 1 186 140
GB-A- 1 122 345
GB-A- 2 026 110

(73) Patentinhaber : **Binder Magnete GmbH**
**Mönchweiler Strasse 1**
**D-7730 Villingen-Schwenningen 1 (DE)**

(72) Erfinder : **Bausch, Edmund, Ing. Grad.**
**Bützestrasse 4**
**D-7730 Villingen-Schwenningen 1 (DE)**
Erfinder : **Sautter, Hans**
**Bürkstrasse 72**
**D-7730 Villingen-Schwenningen 1 (DE)**

(74) Vertreter : **Patentanwälte Dipl.-Ing. Klaus Westphal**
**Dr. rer. nat. Bernd Mussgnug Dr. rer.nat. Otto Buchner**
**Waldstrasse 33**
**D-7730 VS-Villingen (DE)**

EP 0 078 944 B1

Jouve, 18, rue St-Denis, 75001 Paris, France

## Beschreibung

Die Erfindung betrifft eine elektromagnetisch betätigte Federdruckbremse gemäß dem Oberbegriff des Patentanspruchs 1.

Federdruckbremsen dieser Gattung werden in der Regel als elektromagnetisch gelüftete Federdruckbremse ausgebildet, bei denen bei eingeschalteter Spule die Bremse gelüftet wird, so daß sich die Welle frei drehen kann, während bei Abschalten der Spule bzw. bei einem Spannungsausfall die Bremse durch den Federdruck wirksam wird. Die elektromagnetisch gelüftete Federdruckbremse wird häufig als Sicherheitsbremse eingesetzt, um die Welle eines Motors oder einer Maschine beim Abschalten der Maschine oder bei einem Spannungsausfall sofort stillzusetzen. Es sind jedoch auch Anwendungsfälle möglich, bei welchen die Bremse beim Einschalten der Spule wirksam wird und bei abgeschalteter Spule durch Federdruck gelüftet wird.

Bei einer aus der DE-B-11 86 140 bekannten elektromagnetisch gelüfteten Federdruckbremse der eingangs genannten Gattung sind die den Reibschluß der Bremse erzeugenden Druckfedern axial an die Spule anschließend angeordnet. Es müssen daher keine Bohrungen radial innerhalb oder radial außerhalb der Spule in dem Magnetgehäuse für die Aufnahme der Federn vorgesehen sein, die den für den Magnetfluß zur Verfügung stehenden Querschnitt des Magnetgehäuses schwächen. Es kann daher mit geringen radialen Bauabmessungen der Federdruckbremse eine hohe Magnetkraft und ein entsprechend hohes durch die Druckfedern erzeugtes Bremsmoment erreicht werden. Wegen der geringen Abmessungen eignet sich die Federdruckbremse insbesondere für kleine Geräte und Maschinen.

Bei der aus der DE-B-11 86 140 bekannten elektromagnetisch gelüfteten Federdruckbremse stützen sich die Druckfedern einerseits an der im Magnetgehäuse sitzenden Spule und andererseits an dem axial bewegbaren Anker ab. Zwischen die Spule und die Druckfedern ist jeweils ein amagnetischer Stützring eingesetzt, der die Druckfeder in einer Bohrung aufnimmt. Der Anker weist ebenfalls Bohrungen zur Aufnahme der Druckfedern auf. Die amagnetischen Stützringe verursachen eine Vergrößerung der axialen Baulänge der Federdruckbremse. Die Aufnahme der Druckfedern in Bohrungen des Ankers machen außerdem eine größere axiale Stärke des Ankers notwendig, was ebenfalls zu einer Verlängerung der axialen Abmessungen führt. Die Reduzierung der radialen Bauabmessungen gehht bei dieser bekannten Federdruckbremse daher zumindest teilweise zu Lasten einer vergrößerten axialen Abmessung.

Der Erfindung liegt die Aufgabe zugrunde, eine elektromagnetisch betätigte, insbesondere elektromagnetisch gelüftete Federdruckbremse der eingangs genannten Gattung so zu verbessern, daß sie bei unverändert kleinen radialen Abmessungen auch eine geringere axiale Einbauabmessung aufweist und kostengünstig herstellbar ist.

Diese Aufgabe wird erfindungsgemäß gelöst durch die Merkmale des kennzeichnenden Teils des Patentanspruchs 1.

Vorteilhafte Ausführungsformen und Weiterbildungen der Erfindung sind in den Unteransprüchen angegeben.

Durch die erfindungsgemäße Anordnung der Federn an der vom Anker abgewandten axialen Stirnfläche der Spule können die Federn in Bohrungen des Bodens des topfförmigen Magnetgehäuses eingesetzt werden und sich an dem das Magnetgehäuse umschließenden Kunststoffgehäuse axial abstützen. Trotz der axial an die Spule anschließenden Anordnung der Federn ergibt sich daher keine Verlängerung der axialen Einbauabmessungen der Bremse. Der Anker kann mit einer geringen axialen Stärke ausgebildet sein, die ausschließlich entsprechend dem Magnetfluß gewählt wird. Die im Magnetgehäuse axial verschiebbare Spule stützt sich an dem Anker ab. Um die axialen Abmessungen und die Zahl der benötigten Einzelbauteile gering zu halten, stützt sich die Spule vorzugsweise unmittelbar an dem Anker ab.

Das Magnetgehäuse ist vorzugsweise in ein Kunststoffgehäuse eingeschlossen. Der axial vorstehende äußere Rand des Kunststoffgehäuses dient dabei zur drehfesten, axial beweglichen Führung des Ankers. Ein koaxialer, in das Magnetgehäuse ragender Ansatz des Kunststoffgehäuses dient als Lagerbuchse der abzubremsenden Welle. Außerdem kann das Kunststoffgehäuse noch einen axial abstehenden Zapfen zur das Drehmoment aufnehmenden Verankerung aufweisen. Das als ein einziges einfaches Spritzgußteil herstellbare Kunststoffgehäuse übernimmt somit gleichzeitig die Funktionen der Führung des Ankers, der Lagerung der Welle und der drehmomentabstützenden Verankerung des Magnetsystems. Dies bedeutet eine wesentliche Reduzierung der Einzelbauelemente und damit eine besonders kostengünstige Herstellung der Bremse.

Vorzugsweise ist die Federdruckbremse als elektromagnetisch gelüftete Einflächenbremse ausgebildet, bei welcher eine Nabe drehfest und axial fest auf der abzubremsenden Welle sitzt. Der Anker wird zur Erzeugung des Bremsmoments durch die Federn gegen diese Nabe beaufschlagt. Zur Aufnahme des Bremsdrucks kann sich das Magnetsystem mit seinem Kunststoffgehäuse axial an einer Anbaufläche des Gerätes oder der Maschine abstützen. Vorzugsweise stützt sich das Kunststoffgehäuse jedoch axial an einer Schulter der Welle ab. Dadurch wird die Bremse und insbesondere die Einstellung des axialen Lüftspaltes unabhängig von dem Einbau der Bremse und insbesondere unabhängig von einem axialen Lagerspiel der Welle in diesem Gerät.

Die Federdruckbremse ist aus einer sehr geringen Anzahl von kostengünstig herstellbaren Einzelteilen aufgebaut. Die Einbauabmessungen der Bremse sind sowohl in axialer als auch in radialer Richtung gering. Dennoch ist eine große Magnetkraft des Lüftsystems möglich, so daß die das Bremsmoment erzeugenden Federn eine hohe Druckkraft aufweisen können.

Im folgenden wird die Erfindung anhand eines in der Zeichnung dargestellten Ausführungsbeispiels näher erläutert. Es zeigen :

Figur 1 einen Axialschnitt durch eine Federdruckbremse gemäß der Erfindung und

Figur 2 eine Stirnansicht dieser Federdruckbremse mit abgenommener Nabe.

In dem in der Zeichnung dargestellten Ausführungsbeispiel ist die Federdruckbremse als elektromagnetisch gelüftete Einflächenbremse ausgebildet.

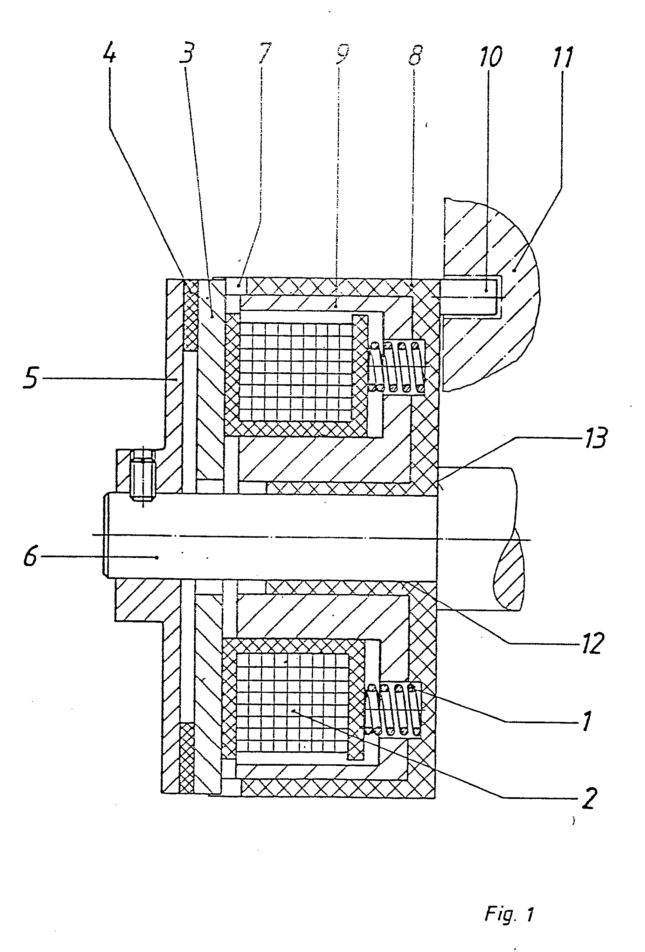

In der Schnittdarstellung der Fig. 1 ist die Federdruckbremse in bremsenden Zustand gezeigt. Die Welle 6 eines Gerätes oder einer Maschine, von welcher nur eine Anbaufläche 11 in der Zeichnung angedeutet ist, wird koaxial von dem Lüftsystem der Bremse umschlossen. Das Lüftsystem weist eine die Welle 6 koaxial umschließende Spule 2 auf, die axial beweglich in einem Magnetgehäuse 9 aufgenommen ist. Das Magnetgehäuse 9 ist ein topfförmiges Tiefziehteil. Das koaxial innerhalb der Spule angeordnete innere Wandteil des Magnetgehäuses 9 ist mit einer größeren Wandstärke ausgebildet als das die Spule 2 außen koaxial umschließende äußere Wandteil. Dadurch ergibt sich für beide Wandteile ein gleicher für die Führung des Magnetflusses effektiver Querschnitt.

Das Magnetgehäuse 9 ist in ein ebenfalls topfförmig ausgebildetes Kunststoffgehäuse 8 eingedrückt und mit diesem verklebt. Das Kunststoffgehäuse 8 ist ein Spritzgußteil und umschließt das Magnetgehäuse 9 koaxial von außen und an dessen Bodenfläche. Ein koaxial in das Magnetgehäuse 9 hineinragender Ansatz 12 des Kunststoffgehäuses 8 dient als Gleitlagerbuchse für die Welle 6.

Die axiale Bodenstirnfläche des Magnetgehäuses 9 ist von vorzugsweise drei oder mehr in gleichen Winkelabständen angeordneten Bohrungen durchsetzt, in welche als Schraubendruckfedern ausgebildete Federn 1 eingesetzt sind. Die Federn 1 stützen sich axial einerseits an der Bodenstirnfläche des Kunststoffgehäuses 8 und andererseits an der axialen Stirnfläche des Spulenkörpers der Spule 2 ab.

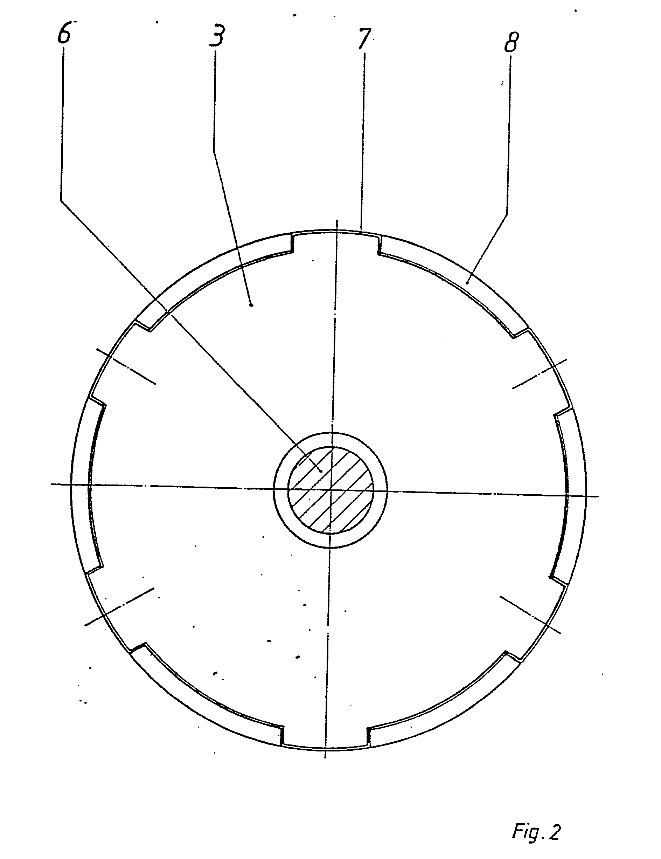

Die Federn 1 drücken die Spule 2 axial gegen einen von der Welle 6 frei durchsetzten scheibenförmigen Anker 3. Wie aus Fig. 2 zu erkennen ist, weist der Anker 3 an seinem Außenumfang radiale Vorsprünge auf, die in sektorförmige Ausnehmungen 7 des axial über das Magnetgehäuse 9 hinausragenden äußeren Randes des Kunststoffgehäuses 8 eingreifen. Auf diese Weise wird der Anker 3 durch das Kunststoffgehäuse 8 zentriert und drehfest und axial beweglich gelagert.

Axial an den Anker 3 anschließend ist eine scheibenförmige Nabe 5 angeordnet, die z. B. mittels einer Madenschraube drehfest und axial fest auf der Welle 6 sitzt. Die Nabe 5 trägt auf ihrer dem Anker 3 zugewandten Fläche einen Reibbelag 4.

Wird das mit der Federdruckbremse versehene Gerät ausgeschaltet oder fällt die Versorgungsspannung aus, so wird der Spule 2 kein Strom zugeführt. In diesem in Fig. 1 dargestellten Zustand drücken die Federn 1 die Spule 2 gegen den Anker 3 und diesen wiederum gegen den Reibbelag 4 der Nabe 5. Das Drehmoment der Welle 6 wird über die Nabe 5 auf den Anker 3 und von diesem über dessen radiale Vorsprünge und die Ausnehmungen 7 auf das Kunststoffgehäuse 8 übertragen. Das Kunststoffgehäuse 8 ist mittels eines axial vorstehenden Zapfens 10 in der Anbaufläche 11 des Gerätes verankert, so daß das auf das Kunststoffgehäuse 8 wirkende Bremsmoment über den Zapfen 10 von der Anbaufläche 11 aufgenommen wird. Der von den Federn 1 erzeugte axiale Bremsdruck wird einerseits von der auf der Welle 6 festsitzenden Nabe 5 und andererseits von einer Schulter 13 der Welle 6 aufgenommen, an welcher sich das Kunststoffgehäuse 8 axial abstützt.

Wird beim Einschalten des mit der Federdruckbremse ausgerüsteten Gerätes der Spule 2 Strom zugeführt, so wird der Anker 3 durch die erzeugte Magnetkraft axial an das Magnetgehäuse 9 gezogen, wobei er die Spule 2 gegen die Kraft der Federn 1 in das Magnetgehäuse 9 hineinschiebt. Der Anker 3 wird dabei von dem Reibbelag 4 abgehoben, so daß sich die Nabe 5 und die Welle 6 freidrehen können. Der Lüftspalt zwischen dem Anker 3 und dem Reibbelag 4 entspricht dabei dem axialen Abstand zwischen dem Anker 3 und dem Rand des Magnetgehäuses 9 bzw. zwischen der Stirnfläche des Spulenkörpers der Spule 2 und dem Boden des Magnetgehäuses 9 in der Darstellung der Figur 1.

**Patentansprüche**

1. Elektromagnetisch betätigte Federdruckbremse mit einer die abzubremsende Welle (6) koaxial umschließenden, in einem Magnetgehäuse (9) angeordneten Spule (2) und mit einem den Reibschluß der Bremse erzeugenden, drehfest und axial beweglich gelagerten Anker (3), der einerseits durch die Druckkraft von axial an die Spule (2) anschließend angeordneten und sich an einer axialen Stirnfläche der Spule (2) abstützenden Federn (1) und andererseits bei eingeschalteter Spule (2) durch die entgegengesetzt wirkende, stärkene Magnetkraft beaufschlagt wird, dadurch gekennzeichnet, daß die Spule (2) in dem Magnetgehäuse (9) axial beweglich ist und sich axial an dem Anker (3) abstützt und daß die Federn (1) sich an der vom Anker (3) abgekehrten Stirnfläche der Spule (2) abstützen.

2. Federdruckbremse nach Anspruch 1, dadurch gekennzeichnet, daß die Spule (2) sich axial unmittelbar an dem Anker (3) abstützt.

3. Federdruckbremse nach Anspruch 1, dadurch gekennzeichnet, daß das Magnetgehäuse (9) ein topfförmiges Tiefziehteil ist.

4. Federdruckbremse nach Anspruch 3, dadurch gekennzeichnet, daß das Magnetgehäuse (9) in ein Kunststoffgehäuse (8) eingeschlossen ist.

5. Federdruckbremse nach Anspruch 4, dadurch gekennzeichnet, daß das Kunststoffgehäuse (8) an seiner dem Anker (3) zugekehrten offenen Stirnfläche einen über das Magnetgehäuse (9) axial überstehenden Rand mit sektorförmigen Ausnehmungen (7) aufweist, in die der Anker (3) zur drehfesten, axial beweglichen Lagerung mit radialen Vorsprüngen eingreift.

6. Federdruckbremse nach Anspruch 4, dadurch gekennzeichnet, daß das Kunststoffgehäuse (8) einen koaxial in das Magnetgehäuse (9) ragenden Ansatz (12) aufweist, der als Lagerbuchse die Welle (6) umschließt.

7. Federdruckbremse nach Anspruch 4, dadurch gekennzeichnet, daß das Kunststoffgehäuse (8) einen axial abstehenden Zapfen (10) zur drehmomentabstützenden Verankerung aufweist.

8. Federdruckbremse nach Anspruch 4, dadurch gekennzeichnet, daß die Federn (1) Bohrungen des Magnetgehäuses (9) durchsetzen und sich an dem Kunststoffgehäuse (8) abstützen.

9. Federdruckbremse nach einem der vorhergehenden Ansprüche, dadurch gekennzeichnet, daß sie als elektromagnetisch gelüftete Einflächenbremse ausgebildet ist, bei welcher der Anker (3) zur Erzeugung des Reibschlusses durch die Federn (1) gegen eine fest auf der Welle (6) sitzende Nabe (5) belastet ist.

10. Federdruckbremse nach Anspruch 9, dadurch gekennzeichnet, daß das Magnetgehäuse (9) bzw. das dieses umschließende Kunststoffgehäuse (8) axial an einer Schulter (13) der Welle (6) abgestützt ist.

**Claims**

1. An electromagnetically actuated spring-loaded brake with a coil (2) coaxially surrounding the shaft (6) to be braked an arranged in a magnet housing (9) and with a torsionally rigidly and axially movable armature (3) which is mounted on bearings generating the frictional grip of the brake, which armature is acted on by the compressive force of springs (1) arranged axially against the coil (2) and supported on an axial face of the coil (2) and by the oppositely acting, stronger magnetic force of the energised coil (2), characterised in that the coil (2) is axially movable in the magnet housing (9) and is supported axially on the armature (3), and the springs (1) are supported on the face of the coil (2) which face away from the armature (3).

2. A spring-loaded brake as claimed in Claim 1, characterised in that the coil (2) is supported axially directly on the armature (3).

3. A spring-loaded brake as claimed in Claim 1, characterised in that the magnet housing (9) is a pot-shaped deep-drawn part.

4. A spring-loaded brake as claimed in Claim 3, characterised in that the magnet housing (9) is enclosed in a plastic housing (8).

5. A spring-loaded brake as claimed in Claim 4, characterised in that the plastic housing (8) has on its open side facing the armature (3), an edge axially overlapping the magnet housing (9) and with sector-shaped recesses (7), into which radial projections on the armature engage to provide a torsionally rigid, axially movable connection.

6. A spring-loaded brake as claimed in Claim 4, characterised in that the plastic housing (8) has an extension (12) protruding coaxially into the magnet housing (9), which extension surrounds the shaft (6) as a bearing bush.

7. A spring-loaded brake as claimed in Claim 4, characterised in that the plastic housing (8) has an axially projecting pin (10) for torque-supporting anchorage.

8. A spring-loaded brake as claimed in Claim 4, characterised in that the springs (1) pass through bores of the magnet housing (9) and are supported on the plastic housing (8).

9. A spring-loaded brake as claimed in any one of the preceding claims, characterised in that the brake is designed as an electromagnetically lifted single-disc brake, in which the armature (3) for generation of the frictional grip is loaded by the springs (1) against a hub (5) securely mounted on the shaft (6).

10. A spring-loaded brake according to Claim 9, characterised in that the magnet housing (9) or the plastic housing (8) surrounding the housing (9) is axially supported on a shoulder (13) of the shaft (6).

**Revendications**

1. Frein à ressorts de compression à commande électromagnétique comportant une bobine (2) logée dans un carter d'aimant (9) et entourant coaxialement l'arbre (6) à freiner, ainsi qu'un induit (3) solidaire en rotation mais mobile axialement, cet induit créant le contact de frottement du frein, en étant sollicité d'une part par la force de compression du ressort (1) axialement adjacent à la bobine (2) et s'appuyant contre une surface frontale axiale de la bobine (2) et d'autre part lorsque la bobine (2) est mise en œuvre par la force magnétique plus intense agissant en sens opposé, frein caractérisé en ce que la bobine (2) est mobile axialement dans le carter (9) de l'aimant et s'appuie axialement contre l'induit (3) et en ce que les ressorts (1) s'appuient contre la surface frontale de la bobine (2) opposée à celle de l'induit (3).

2. Frein à ressorts de compression selon la revendication 1, caractérisé en ce que les bobines (2) s'appuient axialement directement sur l'induit (3).

3. Frein à ressorts de compression selon la revendication 1, caractérisé en ce que le carter (9) de l'aimant est une pièce en étirage profond en forme de pot.

4. Frein à ressorts de compression selon la revendication 3, caractérisé en ce que le carter d'aimant (9) est enfermé dans un carter en matière synthétique (8).

5. Frein à ressorts de compression selon la revendication 4, caractérisé en ce que le carter en matière synthétique (8) comporte au niveau de sa surface frontale ouverte tournée vers l'induit (3), un bord à découpe (7) en forme de secteur, débordant axialement par rapport au carter (9) de l'aimant et dans lequel vient prendre l'induit (3) par l'intermédiaire de saillies radiales pour assurer une liaison solidaire en rotation mais mobile axialement.

6. Frein à ressorts de compression selon la revendication 4, caractérisé en ce que le carter en matière synthétique (8) présente un prolongement (12) venant coaxialement en saillie dans le carter (9) de l'aimant et qui entoure l'arbre (6) à la manière d'une douille de palier.

7. Frein à ressorts de compression selon la revendication 4, caractérisé en ce que le carter de matière synthétique (8) présente un goujon (10) en saillie axialement pour assurer une liaison recevant le couple.

8. Frein à ressorts de compression selon la revendication 4, caractérisé en ce que les ressorts (1) traversent des perçages du carter (9) de l'aimant et s'appuient contre le carter en matière synthétique (8).

9. Frein à ressorts de compression selon l'une des revendications précédentes, caractérisé en ce qu'il est réalisé sous la forme d'un frein à une face, à évacuation d'air électromagnétique, dans lequel l'induit (3) qui génère la liaison par friction est chargé par les ressorts (1) contre un moyeu (5) solidaire de l'arbre (6).

10. Frein à ressorts de compression selon la revendication 9, caractérisé en ce que le carter (9) de l'aimant ou le carter (8) en matière synthétique qui entoure le carter précédent, est appuyé axialement contre un épaulement (13) de l'arbre (6).

0 078 944

Fig. 1

Fig. 2

2